# EUROPEAN PATENT SPECIFICATION

(11) **EP 0 921 685 B1**
(45) Date of publication and mention of the grant of the patent: **30.05.2001**
(21) Application number: 98122781.2
(22) Date of filing: 01.12.1998
(51) Int. Cl.: H04N 7/30

(54) **Image processing method, image processing apparatus, and data storage media**
Bildbearbeitungsverfahren, Bildverarbeitungsgerät und Datenspeichermedium
Méthode de traitement d'image, appareil de traitement d'image et medium de stockage de données

(30) Priority: 04.12.1997 JP 33429097
(43) Date of publication of application: 09.06.1999
(73) Proprietor: MATSUSHITA ELECTRIC INDUSTRIAL CO., LTD., Kadoma-shi, Osaka 571-8501 (JP)
(72) Inventor: Boon, Choong Seng, Moriguchi-shi, Osaka-fu 570-0014 (JP)
(74) Representative: Kügele, Bernhard

(56) References cited:
- EP-A- 0 613 305
- EP-A- 0 720 379
- EP-A- 0 833 517

## Description

### FIELD OF THE INVENTION

The present invention relates to an image processing method, an image processing apparatus, and a data storage medium and, more particularly, to a method and an apparatus for intra-frame predictive coding or intra-frame predictive decoding of an image signal, and a data storage medium containing a program implementing the image signal coding or decoding by software.

### BACKGROUND OF THE INVENTION

In order to store or transmit digital image information with high efficiency, it is necessary to compressively code the digital image information. As a typical method for compressive coding of digital image information, there is DCT (Discrete Cosine Transform) represented by image processing technologies based on JPEG (Joint Photographic Experts Group) and MPEG (Moving Picture Experts Group). Besides, there are waveform coding methods such as sub-band coding, wavelet coding, and fractal coding.

Further, in order to eliminate redundant image information between adjacent display images, such as frames, inter-frame prediction using motion compensation is carried out. That is, a pixel value of a pixel in a target currently being processed is expressed using a difference between this pixel value and a pixel value of a pixel in the previous frame, and this difference signal is subjected to waveform coding.

A description is now given of an image coding method and an image decoding method, based on MPEG, including DCT with motion compensation.

In the image coding method, initially, an input image signal is divided into a plurality of image signals corresponding to a plurality of blocks (macroblocks) composing one image (one frame), and the image signals corresponding to the respective macroblocks are coded block by block. One macroblock is an image display area comprising 16×16 pixels, in one frame. When an image signal corresponding to an arbitrary object image is input, the image signal is divided into a plurality of image signals corresponding to a plurality of blocks (macroblocks) composing a display area corresponding to the object image in one frame (object area).

The image signal corresponding to each macroblock is further divided into image signals corresponding to a plurality of subblocks, each subblock corresponding to an image display area comprising 8×8 pixels, and the image signal corresponding to each subblock is subjected to DCT to generate DCT coefficients of each subblock. Thereafter, the DCT coefficients of each subblock are quantized to generate quantization coefficients (hereinafter, also referred to as transform coefficients). The method of coding the image signal corresponding to each subblock by DCT and quantization as described above is called "intra-frame coding".

At the receiving end, the quantization coefficients corresponding to the respective subblocks are successively subjected to inverse quantization and inverse DCT to reproduce the image signal corresponding to each macroblock.

Meanwhile, there is an image signal coding method called "inter-frame coding". In this coding method, initially, an area comprising 16×16 pixels and having a smallest error in pixel value from a macroblock currently being coded (hereinafter referred to as a target macroblock) is detected as a prediction macroblock from an image signal corresponding to a frame which has already been coded and is temporally adjacent to a frame currently being coded (hereinafter referred to as a target frame), by a method of detecting the motion of the image on the frame, such as block matching.

Thereafter, the image signal of the prediction macroblock is subtracted from the image signal of the target macroblock to generate a difference signal corresponding to the target macroblock, and this difference signal is divided into a plurality of signals corresponding to subblocks each comprising 8 ×8 pixels. Thereafter, the difference signal corresponding to each subblock is subjected to DCT to generate DCT coefficients, and the DCT coefficients are subjected to quantization to generate quantization coefficients (transform coefficients).

Even when the input image signal corresponds to an object image, the inter-frame coding for the image signal is carried out in the same manner as described above.

At the receiving end, the quantization coefficients (quantized DCT coefficients) of the respective subblocks are successively subjected to inverse quantization and inverse DCT to restore the difference signal corresponding to each macroblock. Thereafter, a prediction signal for an image signal corresponding to a target macroblock in a target frame is generated from an image signal of a frame which has already been decoded, by motion compensation, and then the prediction signal and the restored difference signal are added to reproduce the image signal of the macroblock.

By the way, in an ordinary image, there are many areas having similar display data such as shape and luminance in the same frame, and it is possible to approximate the image signals corresponding to these areas in the frame by using this property of image.

Therefore, in recent years, intra-frame predictive coding has been employed as a method for approximating image signals as described above, in image processing technologies based on ITU-T (International Telecommunication Union-Telecommunication Standardization Sector) and MPEG4.

To be specific, in the intra-frame predictive coding, an image signal corresponding to a subblock comprising 8×8 pixels is subjected to DCT (frequency transformation) to generate DCT coefficients (frequency components), and these DCT coefficients are quantized to generate quantization coefficients (transform coefficients). The values of the quantization coefficients (hereinafter also referred to as quantization values) are in a range from "-127" to "127".

Next, using the quantization coefficients of an adjacent subblock as prediction coefficients, differences between the prediction coefficients and the quantization coefficients of the target subblock being processed are obtained, and the difference coefficients are coded. The prediction coefficients are called "intra-frame prediction signal" or "intra-frame prediction coefficients".

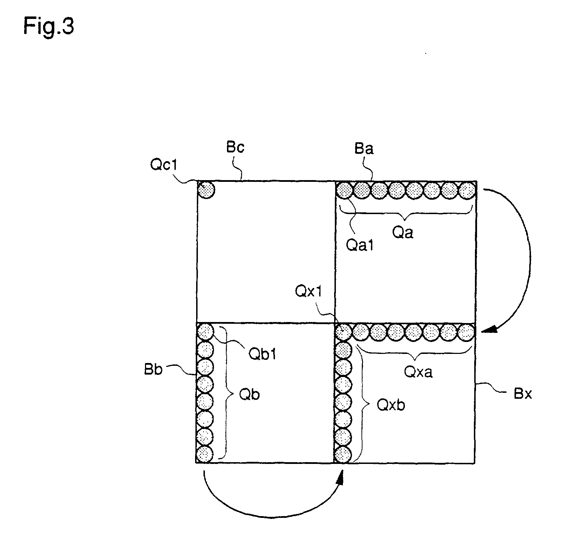

Hereinafter, the intra-frame predictive coding will be described in more detail using figure 3. In the description, "block" means "subblock".

In figure 3, Bx is a target block which is currently coded, and Ba, Bb and Bc are adjacent blocks which are positioned above, on the left of, on the upper-left of the target block Bx, respectively. Each of the blocks Ba, Bb and Bc has a plurality of quantization coefficients obtained by transforming the corresponding image signal. In figure 3, these quantization coefficients are shown by black dots corresponding to the positions of pixels in the blocks Ba, Bb and Bc.

More specifically, a quantization coefficient Qx1 positioned in the upper left hand corner of the target block Bx is a quantized DC coefficient obtained by quantizing a DC component among plural frequency components (DCT coefficients) of this block, and other quantization coefficients in the target block Bx than the quantized DC coefficient Qx1 are quantized AC coefficients obtained by quantizing AC components among the frequency components. A quantization coefficient Qa1 positioned in the upper left hand corner of the adjacent block Ba is a quantized DC coefficient obtained by quantizing a DC component among plural frequency components of this adjacent block, and other quantization coefficients in the adjacent block Ba than the quantized DC coefficient Qal are quantized AC coefficients obtained by quantizing AC components among the frequency components. A quantization coefficient Qb1 positioned in the upper left hand corner of the adjacent block Bb is a quantized DC coefficient obtained by quantizing a DC component among plural frequency components of this adjacent block, and other quantization coefficients in the target block Bb than the quantized DC coefficient Qb1 are quantized AC coefficients obtained by quantizing AC components among the frequency components. A quantization coefficient Qc1 positioned in the upper left hand corner of the adjacent block Bc is a quantized DC coefficient obtained by quantizing a DC component among plural frequency components of this adjacent block.

In the conventional intra-frame predictive coding, however, the quantization coefficients in the target block other than those abutting the upper and left edges of this block are not subjected to predictive coding. For this reason, in figure 3, only the quantized DC coefficient Qx1, an AC coefficient group Qxa comprising the quantized AC coefficients abutting the upper edge, and an AC coefficient group Qxb comprising the quantized AC coefficients abutting the left edge are shown in the target block Bx. In the adjacent block Ba, only the quantized DC coefficient Qa1 and a quantization coefficient group Qa comprising the quantized AC coefficients abutting the upper edge are shown. In the adjacent block Bb, only the quantized DC coefficient Qb1 and a quantization coefficient group Qb comprising the quantized AC coefficients abutting the left edge are shown. In the adjacent block Bc, only the quantized DC coefficient Qc1 is shown.

The intra-frame predictive coding is carried out as follows. Initially, a first difference value between the quantized DC coefficient Qc1 of the upper-left adjacent block Bc and the quantized DC coefficient Qa1 of the upper adjacent block Ba is compared with a second difference value between the quantized DC coefficient Qc1 of the upper-left adjacent block Bc and the quantized DC coefficient Qb1 of the left adjacent block Bb.

When the first difference value is smaller than the second difference value, the quantization coefficients of the quantization coefficient group Qb of the left adjacent block Bb are selected as prediction coefficients for the quantized DC coefficient Qx1 and the quantization coefficients of the AC coefficient group Qxb in the target block Bx. On the other hand, when the second difference value is smaller than the first difference value, the quantization coefficients of the quantization coefficient group Qa in the upper adjacent block Ba are selected as prediction coefficients for the quantized DC coefficient Qx1 and the quantization coefficients of the AC coefficient group Qxa in the target block Bx.

Usually, prediction of quantization coefficients in the target block Bx is carried out for either the quantized DC coefficient Qx1 and the quantization coefficients of the AC coefficient group Qxa which are arranged in the horizontal direction or the quantized DC coefficient Qx1 and the quantization coefficients of the AC coefficient group Qxb which are arranged in the vertical direction.

Then, the quantization coefficients of the quantization coefficient group Qa (Qb) in the adjacent block Ba (Bb), which have been decided as prediction coefficients, are extracted from the quantized DC coefficient Qx1 and the quantization coefficients of the AC coefficient group Qxa (Qxb), whereby quantized difference coefficients of the target block are obtained.

Thereafter, the quantized difference coefficient corresponding to the quantized DC coefficient Qx1, the quantized difference coefficients corresponding to the quantization coefficients of the AC coefficient group Qxa (Qxb), and the other quantization coefficients which have not been subjected to prediction are encoded by using code-words comprising a predetermined number of variable-length codes and a predetermined number of fixed-length codes having the same bit length (for example, 8 bits).

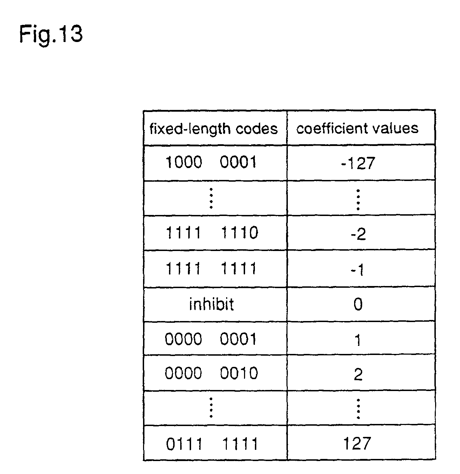

In the coding process, if some of the above-described quantized difference coefficients have no variable-length codes corresponding to their values, these difference coefficients are coded by using fixed-length codes each having a code length of 8 bits, which are specifically shown in figure 13.

Like the quantization coefficients, the quantized difference coefficients are transformed to fixed-length codes corresponding to the values ranging from "-127" to "127".

By the way, in the above-described intra-frame predictive coding, it is necessary to reversibly encode the quantized difference coefficients. That is, the quantized difference coefficients which have been decoded must have the same values as those before encoded. To satisfy this, sufficient bit number is required of the code length of the fixed-length codes expressing the quantized difference coefficients.

As described above, in the intra-frame predictive coding, the values of the quantized difference coefficients are in the range from "-127" to "127", and the quantized difference coefficients are expressed by using fixed-length codes each having a code length of 8 bits. In this case, however, since the quantization coefficients have their values in the range from "-127" to "127", the quantized difference coefficients have their values in the range from "-254" to "254" and, therefore, there arises an occasion where some of the quantized difference coefficients cannot be encoded by the 8-bit fixed-length codes shown in figure 13.

This occasion may be avoided by using fixed-length codes each having a code length of 9 bits. In this case, however, the values of the quantized difference coefficients ranging from "-127" to "127" must be encoded by the 9-bits fixed length codes, resulting in degradation of coding efficiency for the quantized difference coefficients.

In order to avoid the above-described occasion, there is another method in which, when the values of some quantized difference coefficients exceed the range from "-127" to "127", the values of these coefficients are set to the lower limit value "-127" or the upper limit value "127" in the range. In this case, however, the quantized difference coefficients cannot be reversibly encoded.

### SUMMARY OF THE INVENTION

It would be desirable to provide an image processing method and apparatus capable of performing intra-frame predictive coding to transform coefficients reversibly, without degrading the coding efficiency, when the transform coefficients (quantization coefficients) obtained by compressively transforming an image signal are encoded by using fixed-length codes having the same bit length.

It would also be desirable to provide an image processing method and apparatus capable of realizing intra-frame predictive decoding of transform coefficients which have been encoded by the above-described reversible intra-frame predictive coding with no degradation of coding efficiency.

It would also be desirable to provide a data storage medium containing a program implementing, by a computer, the above-described reversible intra-frame predictive coding with no degradation of coding efficiency, or the intra-frame predictive decoding adapted to the intra-frame predictive coding.

Other advantages of the invention will become apparent from the detailed description that follows. The detailed description and specific embodiments described are provided only for illustration since various additions and modifications within the scope of the invention will be apparent to those of skill in the art from the detailed description.

According to a first aspect of the present invention, there is provided an image coding method for an image signal divided into processable signal units, the method comprising transforming an image signal into transform coefficients by data-compressing the image signal for each said processable unit, and coding the transform coefficients in a coding process using code-words comprising a predetermined number of codes, and the coding process comprises the steps of: identifying whether or not the values of target difference coefficients, which are differences between target transform coefficients to be processed and transform coefficients as prediction coefficients other than the target transform coefficients, correspond to any of the codes composing the code-words; coding the target difference coefficients when the values of the target difference coefficients correspond to any of the codes in the code-words; and coding the target transform coefficients when at least one of the values of the target difference coefficients corresponds to none of the codes in the code-words. Therefore, when transform coefficients obtained by compressively transforming an image signal are encoded using predetermined code-words, intra-frame predictive coding of the transform coefficients can be performed reversibly without degrading the coding efficiency.

According to a second aspect of the present invention, in the image coding method of the first aspect, the code-words are composed of a plurality of variable-length codes, and a plurality of fixed-length codes having the same bit length; in the process of coding each of the target transform coefficients, when there is a variable-length code corresponding to the value of the target transform coefficient, the target transform coefficient is coded using the variable-length code, and when there is no variable-length code corresponding to the value of the target transform coefficient, the target transform coefficient is coded using a fixed-length code; and in the process of coding each of the target difference coefficients, when there is a variable-length code corresponding to the value of the target difference coefficient, the target difference coefficient is coded using the variable-length code, and when there is no variable-length code corresponding to the value of the target difference coefficient, the target difference coefficient is coded using a fixed-length code. Therefore, efficient coding is realized.

According to a third aspect of the present invention, there is provided an image coding method comprising dividing an image signal into image signal units respectively corresponding to a plurality of unit areas into which an image space for display is divided, and coding an image signal unit corresponding to a target unit area to be coded the step of coding the image signal unit being as aforesaid in the first aspect.

According to a fourth aspect of the present invention, there is provided an image decoding method for decoding a coded image signal based on an identification signal from the outside, and the decoding comprises the steps of: deciding whether a coded image signal to be decoded corresponds to target transform coefficients obtained by data compression of an image signal or target difference coefficients which are differences between the target transform coefficients and transform coefficients as prediction coefficients other than the target transform coefficients, based on the identification signal; decoding the coded image signal to generate a decoded image signal to be processed as reproduced coefficients when the coded image signal to be decoded corresponds to the target transform coefficients; generating reproduced coefficients by adding prediction coefficients obtained from a decoded image signal other than the decoded image signal to be processed, to the decoded image signal to be processed, when the coded image signal to be decoded corresponds to the target difference coefficients; and subjecting the reproduced coefficients to data expansion to generate a reproduced image signal. Therefore, it is possible to realize a decoding method adapted to a coding method in which either coding of target transform coefficients or coding of difference coefficients between the target transform coefficients and the prediction coefficients is selected according to whether the coefficients to be coded have corresponding codes or not.

According to a fifth aspect of the present invention, there is provided an image coding apparatus for coding an image signal divided into processable signal units, the apparatus comprising a data compression unit for transforming the image signal into transform coefficients by data compression for each said processable unit, and a coding unit for coding the transform coefficients by using code-words comprising a predetermined number of codes. The data compression unit comprises difference coefficient generating means for generating target difference coefficients which are differences between target transform coefficients to be processed and transform coefficients as prediction coefficients other than the target transform coefficients. The coding unit comprises identification means for identifying whether the values of the target difference coefficients correspond to any of the codes in the code-words, and coding means for coding the target difference coefficients when the values of the target difference coefficients correspond to any of the codes in the code-words, while coding the target transform coefficients when at least one of the values of the target difference coefficients corresponds to none of the codes in the code-words, based on the result from the identification means. Therefore, when transform coefficients obtained by compressively transforming an image signal are encoded using predetermined code-words, intra-frame predictive coding of the transform coefficients can be performed reversibly without degrading the coding efficiency.

According to an sixth aspect of the present invention, there is provided an image decoding apparatus for decoding a coded image signal based on an identification signal from the outside, and the decoding apparatus comprises: decision means for deciding whether a coded image signal to be decoded corresponds to target transform coefficients obtained by data compression of an image signal, or target difference coefficients which are differences between the target transform coefficients and transform coefficients as prediction coefficients other than the target transform coefficients, based on the identification signal; first coefficient generating means for generating a decoded image signal to be processed as first reproduced coefficients by decoding the coded image signal to be processed; second coefficient generating means for generating second reproduced coefficients by adding prediction coefficients obtained from a decoded image signal other than the decoded image signal to be processed, to the decoded image signal to be processed; switching means for selecting the output from the first coefficient generating means when the coded image signal to be processed corresponds to the target transform coefficients, while selecting the output from the second coefficient generating means when the coded image signal to be processed corresponds to the target difference coefficients, based on the result from the decision means; and data expansion means for data-expanding the reproduced coefficients output from the switching means to generate a reproduced image signal. Therefore, it is possible to realize a decoding method adapted to a coding method in which either coding of target transform coefficients or coding of difference coefficients between the target transform coefficients and the prediction coefficients is selected according to whether the coefficients to be coded have corresponding codes or not.

According to an seventh aspect of the present invention, there is provided a data storage medium containing a program processing an image signal, and the program is a program which makes a computer process an image signal by an image processing method according to any of the first to fourth aspects.

### BRIEF DESCRIPTION OF THE DRAWINGS

In the following embodiments, only Figures 1-5 and 12 relate to embodiments covered by the claims. The other figures and description are presented for technical information.

Figure 1 is a block diagram illustrating an image coding apparatus according to a first embodiment of the present invention.

Figure 2 is a flowchart for explaining an intra-frame predictive coding process by the image coding apparatus according to the first embodiment.

Figure 3 is a schematic diagram for explaining prediction of transform coefficients in the intra-frame predictive coding process by the image coding apparatus according to the first embodiment.

Figure 4 is a block diagram illustrating an image decoding apparatus according to a second embodiment of the present invention.

Figure 5 is a flowchart for explaining an intra-frame predictive decoding process by the image decoding apparatus according to the second embodiment.

Figure 6 is a block diagram illustrating an image coding apparatus according to a third embodiment.

Figure 7 is a flowchart for explaining an intra-frame predictive coding process by the image coding apparatus according to the third embodiment.

Figures 8(a) and 8(b) are schematic diagrams for explaining specific arithmetical processes in the intra-frame predictive coding process by the image coding apparatus according to the third embodiment.

Figure 9 is a block diagram illustrating an image decoding apparatus according to a fourth embodiment.

Figure 10 is a flowchart for explaining an intra-frame predictive decoding process by the image decoding apparatus according to the fourth embodiment.

Figures 11(a) and 11(b) are schematic diagrams for explaining specific arithmetical processes in the intra-frame predictive decoding process by the image decoding apparatus according to the fourth embodiment.

Figures 12(a)-12(c) are diagrams for explaining a data storage medium which contains a program implementing the image signal processing according to any of the first to fourth embodiments by using a computer system.

Figure 13 is a diagram illustrating fixed-length codes used for coding and decoding according to the prior art and the aforementioned embodiments of the invention, and quantization coefficients (transform coefficients) corresponding to the respective codes.

### DETAILED DESCRIPTION OF THE PREFERRED EMBODIMENTS

### Embodiment 1.

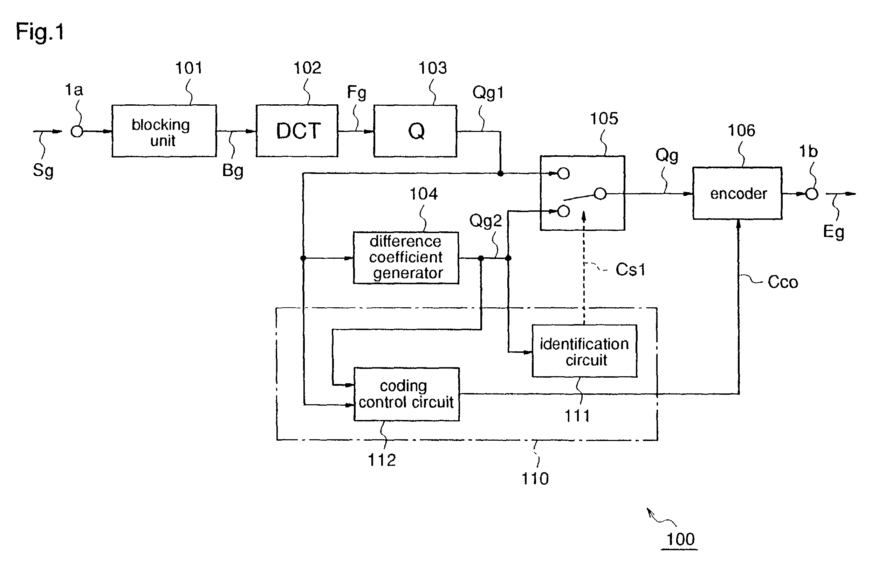

Figure 1 is a block diagram for explaining an image coding apparatus 100 according to a first embodiment of the present invention.

The image coding apparatus 100 receives an input image signal Sg through an input terminal la, encodes the image signal Sg by a coding method including intra-frame predictive coding, and outputs a coded image signal Eg through an output terminal 1b.

In this first embodiment, the input image signal Sg is a digital image signal comprising a luminance signal and a chrominance signal. Further, the image coding apparatus 100 processes, as the input image signal Sg, an image signal corresponding to an image having an arbitrary shape in an object area as well as an image signal corresponding to an image in an image space having a rectangle shape (one frame).

The image coding apparatus 100 includes a blocking unit 101, a DCT unit 102, and a quantizer 103. The blocking unit 101 divides the input image signal Sg into a plurality of image signals respectively corresponding to a plurality of blocks (processing units) into which one image (frame) or one object area is divided, and outputs image signals Bg (hereinafter, also referred to as blocked image signals). The DCT unit 102 transforms the image signal Bg corresponding to a target block which is currently processed, into frequency components Fg by discrete cosine transform (DCT). The quantizer 103 quantizes the frequency components Fg and outputs quantization coefficients (transform coefficients) Qg1.

The image coding apparatus 100 further includes a difference coefficient generator 104, a switch 105, and an encoder 106. The difference coefficient generator 104 employs the quantization coefficients of a block which is positioned in the vicinity of the target block and has already been coded as prediction coefficients for the target block, generates difference values between the quantization coefficients Qg1 of the target block and the prediction coefficients, and outputs the difference values as difference coefficients (quantized difference coefficients) Qg2 of the target block. The switch 105 selects either the output Qg1 from the quantizer 103 or the output Qg2 from the difference coefficient generator 104 according to a switch control signal Cs1, and outputs it as a selected output Qg. The encoder 106 subjects the output Qg from the switch 105 to a coding process using code words comprising a predetermined number of variable-length codes and a predetermined number of fixed-length codes having the same bit length (8 bits), according to a coding control signal Cco, and outputs a coded image signal Eg.

The image coding apparatus 100 further includes a coding control unit 110 which generates the control signals Cs1 and Cco. The coding control unit 110 comprises an identification circuit 111 and a coding control circuit 112. The identification circuit 111 identifies whether or not the value of the output Qg2 from the difference coefficient generator 104 corresponds to any of the plural codes composing the code words in the encoder 106, and outputs the switch control signal Cs1 to the switch 105. The coding control circuit 112 controls the encoder 106, based on the outputs Qg1 and Qg2, so as to perform either variable-length coding or fixed-length coding for the respective outputs.

The switch 105 selects a signal to be input to the encoder 106 in the following manner, based on the control signal Cs1. When there is a code corresponding to the value of the output Qg2, the switch 105 supplies the output Qg2 from the difference coefficient generator 104 to the encoder 106. When there is no code corresponding to the value of the output Qg2, the switch 105 supplies the output Qg1 from the quantizer 105 to the encoder 106.

A description is given of the operation of the image coding apparatus 100.

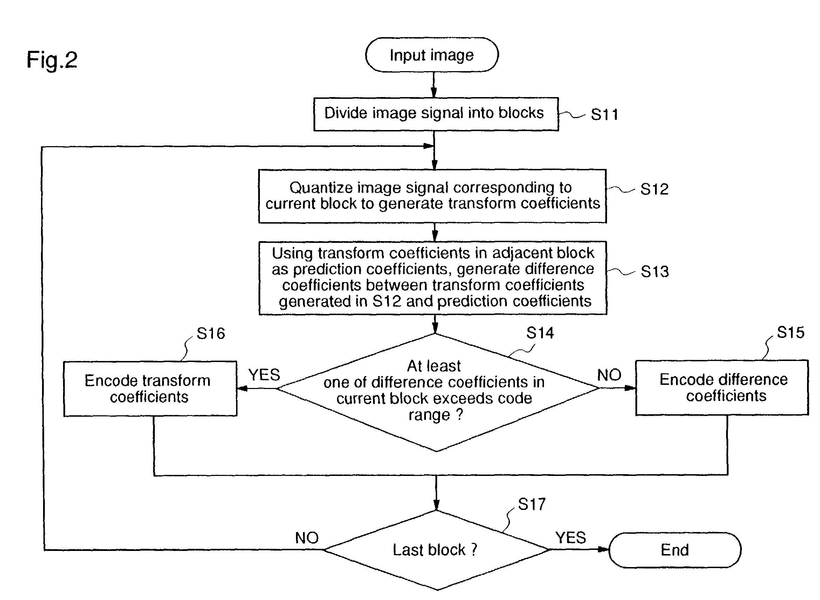

Figure 2 is a flowchart for explaining the intra-frame predictive coding by the image coding apparatus 100.

When the input image signal Sg to be processed is input to the image coding apparatus 100 (step S10), the image signal Sg is divided into a plurality of image signals corresponding to a plurality of unit areas (blocks) into which one image (one frame) or one object area is divided, in the blocking unit 101 (step S11). In this first embodiment, each block is an image display area comprising 8×8 pixels.

Next, the image signals Bg corresponding to the respective blocks are compressed block by block and transformed to quantization coefficients (transform coefficients). More specifically, the image signal Bg corresponding to the target block to be compressed is transformed to frequency components Fg by DCT in the DCT unit 102, and the frequency components Fg are transformed to quantization coefficients Qgl by quantization in the quantizer 103 (step S12). The values of the quantization coefficients are integers within a range from "-127" to "127".

In the difference coefficient generator 104, prediction coefficients for the target block are decided by referring to the quantization coefficients of a block which is positioned in the vicinity of the target block and has already been compressed, and the prediction coefficients are subtracted from the quantization coefficients of the target block to obtain difference coefficients Qg2 of the target block (step S13). To be specific, eight difference coefficients Qg2 are produced for the target block and, besides the difference coefficients, there are fifty-six quantization coefficients in the target block. The method of deciding the prediction coefficients for the target block by referring to the quantization coefficients of a block in the vicinity of the target block is identical to the method already described with respect to the conventional intra-frame predictive coding by using figure 3.

Turning to step S14, in the identification unit 111, it is identified whether or not any of the plural difference coefficients in the target block exceeds the range from "-127" to "127".

When the result in step S14 is that at least one of the difference coefficients is smaller than "-127" or larger than "127", "0" is set as an identifier of this block in the identification circuit 111, and the switch 105 is controlled by the switch control signal Cs1 from the identification circuit 111 so as to select the output Qg1 from the quantizer 103. Receiving the output Qg1 from the quantizer 103 through the switch 105, the encoder 106 encodes the output (transform coefficients) Qg1 (step S16).

When the result in step S14 is that none of the difference coefficients in the target block exceeds the range from "-127" to "127", "1" is set as an identifier of the target block in the identification circuit 111, and the switch 105 is controlled by the switch control signal Cs1 from the identification circuit 111 so as to select the output Qg2 from the difference coefficient generator 104. Receiving the output Qg2 from the difference coefficient generator 104 through the switch 105, the encoder 106 encodes the output (difference coefficients) Qg2 (step S15).

In this coding process, like the coding process based on MPEG1, the quantization values (quantization coefficients or difference coefficients) are fundamentally encoded by variable-length coding and, when there are no variable-length codes corresponding to the quantization values, the quantization values are encoded by using the fixed-length codes shown in figure 13. Therefore, in the coding control unit 112, it is decided whether there are variable-length codes corresponding to the quantization values, based on the output Qg1 from the quantizer 103 and the output Qg2 from the difference coefficient generator 104. Further, in the encoder 106, according to the coding control signal Cco based on the result of the decision, either variable-length coding or fixed-length coding is carried out.

Thereafter, it is decided whether or not the target block is the last block among the blocks composing one frame or one object area (step S17). When the target block is the last block, the intra-frame predictive coding is ended. When the target block is not the last block, the processes in steps S12∼S17 are repeated.

The quantization coefficients or the difference coefficients so encoded are output from the encoder 106 together with the identifier and then recorded in a recording medium or transmitted toward an image decoding apparatus.

As described above, the first embodiment of the present invention relates to a method for transforming an input image signal to transform coefficients by data compression and then coding the transform coefficients using N-bit codes (N = integer), i.e., fixed-length codes each having a code length of N bits. In this method, transform coefficients of a block positioned in the vicinity of a target block being processed are used as prediction coefficients for the target block, and difference coefficients which are difference values between the transform coefficients of the target block and the prediction coefficients are coded by using the N-bit codes. In the coding process, when the values of the difference coefficients are within a range of the codes that can be expressed by N bits, the difference coefficients of the target block are encoded. On the other hand, when at least one of the difference coefficients exceeds the range, the transform coefficients of the target block are encoded. Therefore, intra-frame predictive coding adapted to the transform coefficients obtained by data compression of the image signal can be performed reversibly without degrading the coding efficiency.

To be specific, when at least one of the values of the difference coefficients exceeds the range that can be expressed by 8-bit codes, the transform coefficients are encoded instead of the difference coefficients. In this case, the difference coefficients can always be encoded reversibly because it is not necessary to limit the values of the difference coefficients in a range from -(2^{(N-1)}-1) to (2^{(N-1)}-1) (in this embodiment, from -127 to 127).

Although it is premised that the image coding apparatus 100 quantizes the corresponding DCT coefficients between the adjacent blocks with the same quantization width, the apparatus 100 may quantize the corresponding DCT coefficients between adjacent blocks with different quantization widths. In this case, however, it is necessary to generate difference coefficients based on coefficients obtained by inversely quantizing the transform coefficients obtained by quantizing the DCT coefficients, and the difference coefficient generator 104 must be provided with a circuit structure for this process.

Further, although in this first embodiment DCT is employed for data compression of an image signal corresponding to each block, wavelet transform may be employed.

### Embodiment 2.

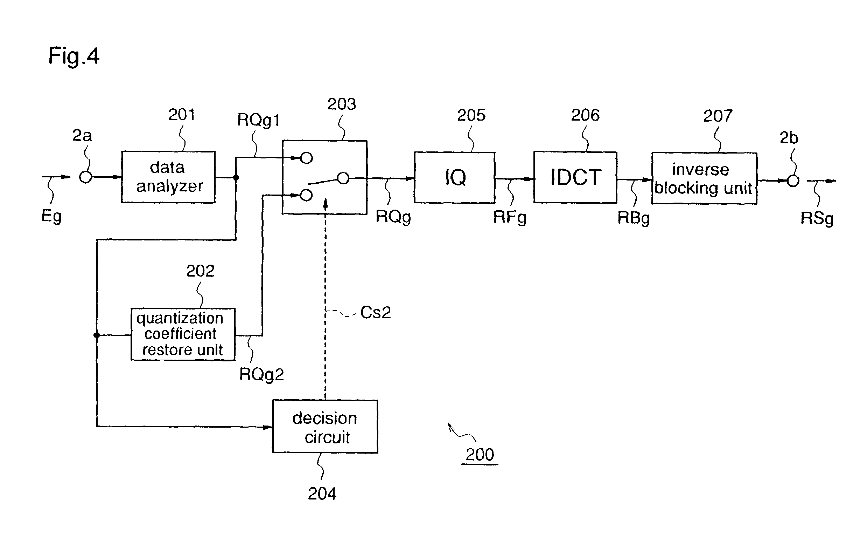

Figure 4 is a block diagram for explaining an image decoding apparatus 200 according co a second embodiment of the present invention.

The image decoding apparatus 200 of this second embodiment is adapted to the image coding apparatus 100 of the first embodiment. That is, a coded image signal Eg output from the image coding apparatus 100 is input to the decoding apparatus 200 through the input terminal 2a, and the decoding apparatus 200 decodes the coded image signal Eg by a decoding method including intra-frame predictive decoding, and outputs a reproduced image signal RSg through the output terminal 2b.

The image decoding apparatus 200 includes a data analyzer 201 and a quantization coefficient restore unit 202. The data analyzer 201 decodes the coded image signal Eg by analyzing the code sequence, thereby restores quantization coefficients RQg1 for each block being a decoding unit (hereinafter, also referred to as restored coefficients RQg1). When the restored coefficients correspond to the difference coefficients of the first embodiment, the quantization coefficient restore unit 202 employs the restored coefficients of a block which is positioned in the vicinity of a target block being decoded and has already been decoded, as prediction coefficients for the target block, and obtains the sum of the restored coefficients RQg1 of the target block and the prediction coefficients, as quantization coefficients (restored coefficients) RQg2 of the target block.

Furthermore, the image decoding apparatus 200 includes a switch 203, an inverse quantizer (IQ) 205, an inverse DCT unit 206, and an inverse blocking unit 207. The switch 203 selects either the output RQg1 from the data analyzer 201 or the output RQg2 from the quantization coefficient restore unit 202 according to a switch control signal Cs2, and outputs it as restored coefficients RQg. The inverse quantizer 205 subjects the output RQg from the switch 203 to inverse quantization to generate restored DCT coefficients. The inverse DCT unit 206 subjects the restored DCT coefficients RFg to inverse DCT and outputs a restored image signal RBg. The inverse blocking unit 207 integrates the restored image signals RBg of the respective blocks to generate a reproduced image signal RSg having a scanning line structure.

A description is given of the operation of the image decoding apparatus 200.

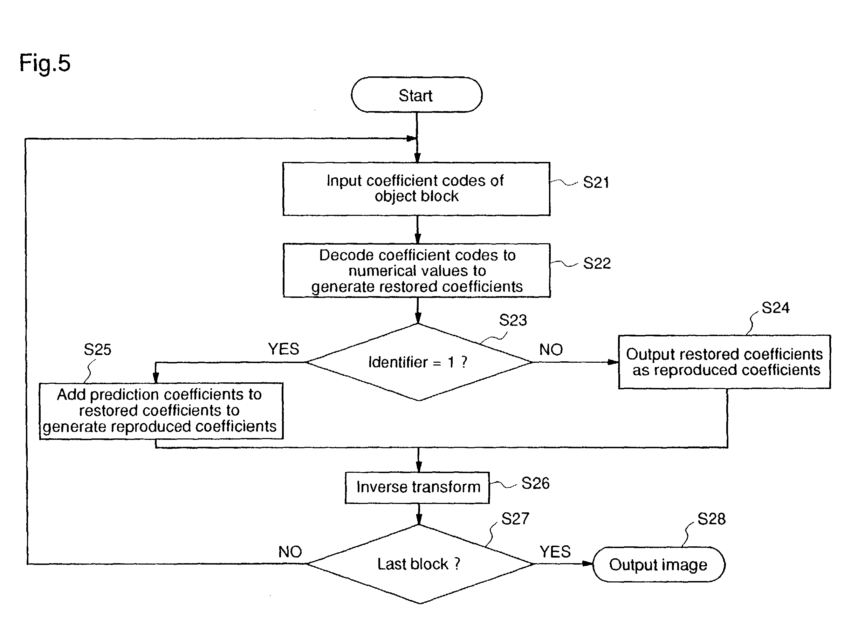

Figure 5 is a flowchart for explaining an intra-frame predictive decoding process by the image decoding apparatus 200.

In the image decoding apparatus 200, when decoding is started and a coded image signal Eg corresponding to each of plural blocks into which one frame or one object area is divided is input to the apparatus together with a control signal (an identifier in the first embodiment) (step S21), the data analyzer 201 transforms the code sequence of the coded image signal Eg to restored coefficients RQg1 by data analysis (step S22). The data analyzer 201 performs variable-length decoding to the code sequence when the code sequence comprises variable-length codes, and performs fixed-length decoding to the code sequence when the code sequence comprises fixed-length codes.

In step S23, the decision circuit 204 decides the identifier of the target block. When the identifier is not "1", since the restored coefficients RQg1 are restored quantization coefficients, the switch 203 is controlled by the control signal Cs2 from the decision circuit 204 such that the restored coefficients RQg1 from the data analyzer 201 are output as a switch output RQg toward the inverse quantizer 205 (step S24).

On the other hand, when the decision in step S23 is that the identifier of the target block is "1", the restored coefficients RQg1 of the target block are restored difference coefficients. Therefore, in the quantization coefficient restore unit 202, the restored quantization coefficients of a block which is positioned in the vicinity of the target block and has already been decoded are employed as prediction coefficients for the target block, and the sum of the restored coefficients (restored difference coefficients) RQg1 of the target block and the prediction coefficients is obtained as restored coefficients (restored quantization coefficients) RQg2 of the target block (step S25). In this case, the switch 203 is controlled by the control signal Cs2 from the decision circuit 204 such that the restored coefficients RQg2 from the quantization coefficient restore unit 202 are output toward the inverse quantizer 205.

The restored coefficients (restored quantization coefficients) so obtained are transformed to restored DCT coefficients RFg by inverse quantization in the inverse quantizer 205, and the restored DCT coefficients RFg are transformed to a restored image signal RBg corresponding to each block by inverse DCT in the inverse DCT unit 206 (step S26).

Thereafter, in the image decoding apparatus 200, it is decided whether or not the target block is the last block among the blocks composing one frame (step S27). When the target block is the last block, the intra-frame predictive decoding is ended, and the inverse blocking unit 207 integrates the restored image signals RBg corresponding to the respective blocks and outputs a reproduced image signal RSg having a scanning line structure and corresponding to one frame or one object area (step S28). When the target block is not the last block, the processes of steps S21∼S27 are repeated.

As described above, according to the second embodiment of the invention, either the restored difference coefficients or the restored quantization coefficients, which have been restored by the data analyzer 201, are selected according to the identifier which has been set for each block at the coding end, and the selected coefficients are subjected to inverse transformation. Therefore, it is possible to realize an intra-frame predictive decoding method adapted to an intra-frame predictive coding method in which only difference coefficients having corresponding 8-bit codes are coded and, instead of difference coefficients having no corresponding 8-bit codes, transform coefficients are coded.

### Embodiment 3.

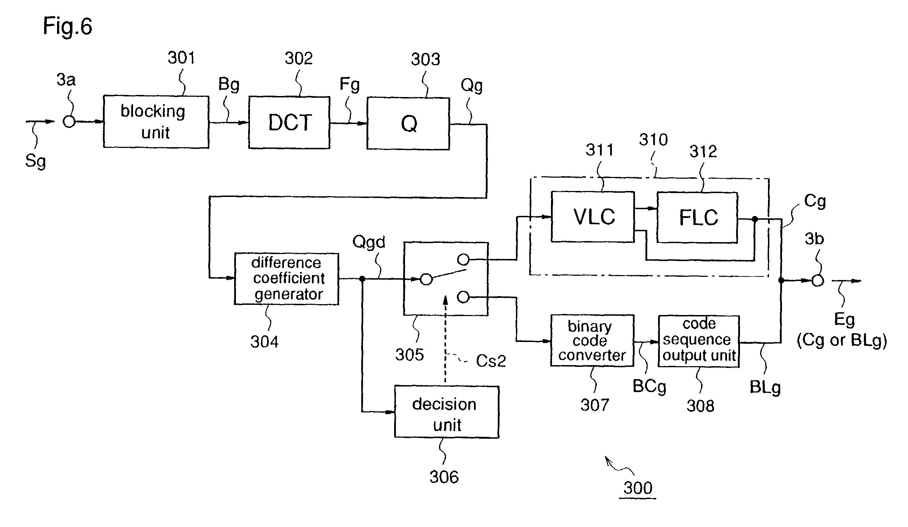

Figure 6 is a block diagram for explaining an image coding apparatus 300 according to a third embodiment (not forming part of the present invention).

The image coding apparatus 300 encodes an input image signal Sg applied to an input terminal 3a by a coding method including intra-frame prediction, and outputs a coded image signal Eg through an output terminal 3b.

In this third embodiment, the input image signal Sg is a digital image signal comprising a luminance signal and a chrominance signal. Further, the image coding apparatus 300 processes, as the input image signal Sg, an image signal corresponding to an image having an arbitrary shape in an object area as well as an image signal corresponding to an image in an image space having a rectangle shape (one frame).

The image coding apparatus 300 includes a blocking unit 301, a DCT unit 302, and a quantizer 303. The blocking unit 301 divides the input image signal Sg into a plurality of image signals respectively corresponding to a plurality of blocks (processing units) into which one image (frame) or one object area is divided, and outputs image signals Bg (hereinafter, also referred to as blocked image signals). The DCT unit 302 transforms the image signal Bg of a target block which is currently processed, into frequency components Fg by discrete cosine transform (DCT). The quantizer 303 quantizes the frequency components Fg and outputs quantization coefficients (transform coefficients) Qg.

The image coding apparatus 300 further includes a difference coefficient generator 304, a coding unit 310, a binary code converter 307, and a code sequence output unit 308. The difference coefficient generator 304 employs the quantization coefficients of a block which is positioned in the vicinity of the target block and has already been encoded, as prediction coefficients for the target block, generates difference values between the quantization coefficients Qg of the target block and the prediction coefficients, and outputs the difference values as difference coefficients Qgd of the target block. The coding unit 310 encodes the difference coefficients Qgd by using code words comprising a predetermined number of variable-length codes and a predetermined number of N-bit fixed-length codes, and outputs a coded signal Cg. The binary code converter 307 binary encodes the difference coefficients Qgd to convert them into coded coefficients BCg. The code sequence output unit 308 outputs an N-bit code sequence BLg comprising lower side N bits of each of the coded coefficients BCg. The coding unit 310 comprises a variable-length encoder 311 and a fixed-length encoder 312. The variable-length encoder 311 performs variable-length coding to the difference coefficients having variable-length codes corresponding to their values, and outputs them as a coded signal Cg. The encoder 311 does not encode the difference coefficients having no variable-length codes corresponding to their values, and passes these coefficients through. The fixed-length encoder 312 performs fixed-length coding to the difference coefficients passing through the variable-length encoder 311 by using N-bit fixed-length codes, and outputs the coefficients as a coded signal Cg.

The image coding apparatus 300 further includes a switch 305 and a decision unit 306. The switch 305 supplies the output Qgd from the difference coefficient generator 304 to either the coding unit 310 or the binary code converter 307, based on the control signal Cs2. The decision unit 306 decides whether or not coding of the difference coefficients by using the code words in the coding unit 310 is possible or not, based on the output from the difference coefficient generator 304, and outputs the control signal Cs2 corresponding to the result of the decision toward the switch 305.

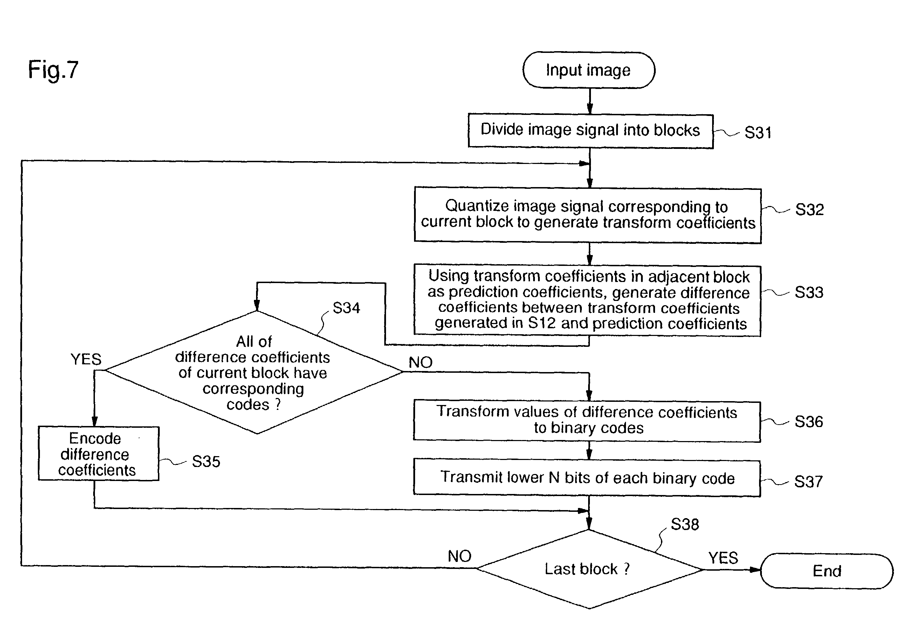

A description is given of the operation of the image coding apparatus 300. Figure 7 is a flowchart for explaining an intra-frame predictive coding process by the image coding apparatus 300.

In this third embodiment, blocking of an image signal in step S31, generation of transform coefficients in step S32, and generation of difference coefficients in step S33 are identical to those already described with respect to steps S11, S12, and S13 in the intra-frame predictive coding process of the first embodiment, respectively.

In step S34, it is decided by the decision unit 306 whether or not all of the difference coefficients of the target block have corresponding codes in the code words of the coding unit 310.

When it is decided in step S34 that all of the difference coefficient of the target block have corresponding codes, the switch 305 is controlled by the control signal Cs2 from the decision unit 306 such that the output Qgd from the difference coefficient generator 304 is supplied to the coding unit 310. Receiving the output Qgd through the switch 305, the coding unit 310 encodes the output Qgd (step S35).

To be specific, when there are variable-length codes corresponding to the difference coefficients, the difference coefficients are subjected to variable-length coding in the variable-length encoder 311 and output as a coded signal Cg of the target block. When there are no variable-length codes corresponding to the difference coefficients, the difference coefficients pass through the variable-length encoder 311 and are input to the fixed-length encoder 312, wherein the difference coefficients are subjected to fixed-length coding and then output as a coded signal Cg of the target block.

On the other hand, when it is decided in step S34 that at least one of the difference coefficients of the target block has no corresponding code, the switch 305 is controlled by the control signal Cs2 from the decision unit 306 such that the output Qgd from the difference coefficient generator 304 is supplied to the binary code converter 307 (step S36).

In the binary code converter 307, the difference coefficients of the target block are converted to coded coefficients BCg by binary coding. Further, in the code sequence output unit 308, an N-bit code sequence BLg comprising lower N bits of each of the coded coefficients BCg is extracted from the coded coefficient BCg (step S37).

Thereafter, it is decided whether or not the target block is the last block among the blocks composing one frame or one object area (step S38). When the target block is the last block, the intra-frame predictive coding is ended. When the target block is not the last block, the processes in steps S32~S38 are repeated.

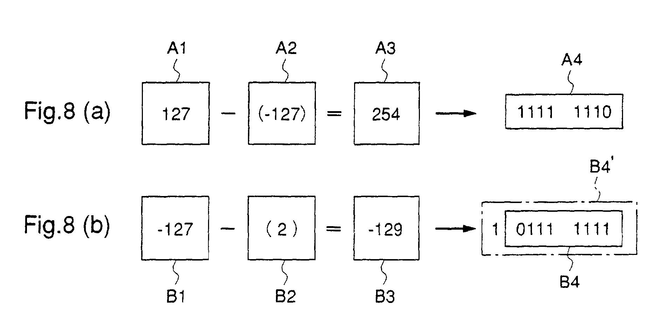

Hereinafter, the binary coding in the intra-frame predictive coding process of this third embodiment will be described in more detail. Figures 8(a) and 8(b) are schematic diagrams for explaining the binary coding.

In these figures, numerical values A1 and B1 are values of transform coefficients, A2 and B2 are values of prediction coefficients, and A3 and B3 are values of difference coefficients. Figure 8(a) shows an example where A3 is 254 and this is transformed to a code sequence A4 as a binary number "1111 1110". Figure 8(b) shows an example where B3 is -129 and this is transformed to a code sequence B4' as a binary number "1 0111 1111".

From the code sequence A4 (B4'), data A4 (B4) comprising the lower 8 bits of the code sequence is extracted and output as a code sequence BLg. In other words, the code sequence A4 corresponding to the difference coefficient A3 shown in figure 8(a) is output as it is. With respect to the code sequence B4' corresponding to the difference coefficient B3 shown in figure 8(b), the code sequence B4 comprising the lower 8 bits of the code sequence B4' is output.

As described above, according to the third embodiment, transform coefficients of a block adjacent to a target block being processed are employed as prediction coefficients for the target block, and difference values between the transform coefficients of the target block and the prediction coefficients are obtained as difference coefficients. When the values of the difference coefficients are within a range of codes which can be expressed by N bits (8 bits), the difference coefficients of the target block are coded by using predetermined code words and then output as code sequences. On the other hand, if at least one of the values of the difference coefficients exceeds the range, the difference coefficients of the target block are transformed to binary codes, and the lower N bits (8 bits) of each binary code is output as a code sequence. Therefore, intra-frame predictive coding of transform coefficients obtained by compressively transforming an image signal can be performed reversibly without degrading the coding efficiency.

### Embodiment 4.

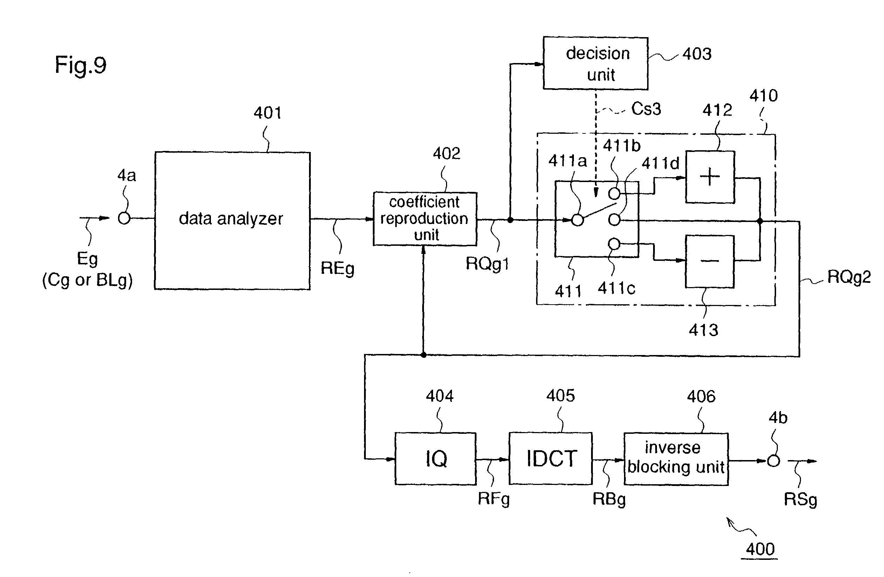

Figure 9 is a block diagram for explaining an image decoding apparatus 400 according to a fourth embodiment (not forming part of the present invention). The image decoding apparatus 400 or this fourth embodiment is adapted to the image coding apparatus 300 of the third embodiment. That is, a coded image signal Eg (a coded signal Cg or N-bit code sequences BLg) output from the image coding apparatus 300 is input to the decoding apparatus 400 through an input terminal 4a. The decoding apparatus 400 decodes the coded image signal Eg and outputs a reproduced image signal Rsg through an output terminal 4b.

The image decoding apparatus 400 includes a data analyzer 401 and a coefficient reproduction unit 402. The data analyzer 401 decodes the coded image signal Eg by analyzing the code sequence, thereby restores difference coefficients REg for each block being a decoding unit (hereinafter, also referred to as restored coefficients REg). The coefficient reproduction unit 402 employs the reproduced coefficients (restored quantization coefficients) of a block which is positioned in the vicinity of a target block being processed and has already been reproduced, as prediction coefficients for the target block, and obtains the sum of the restored coefficients REg of the target block and the prediction coefficients as reproduced coefficients RQg1 of the target block. When the input coded image signal Eg is a variable-length coded signal Cg, the data analyzer 401 decodes the coded image signal Eg by using the code words (code table) in the coding unit 310 of the third embodiment to obtain the restored difference coefficients REg (decimal values). On the other hand, when the coded image signal Eg is a fixed-length coded signal Cg or N-bit code sequences BLg, the data analyzer 401 decimally decodes the coded image signal Eg to transform the signal Eg to the restored difference coefficients REg (decimal values).

Furthermore, the image decoding apparatus 400 includes a reproduced coefficient processing unit 410 and a decision unit 403. The reproduced coefficient processing unit 410 subjects the output RQgl from the coefficient reproduction unit 402 to arithmetic processing, thereby generates reproduced and processed coefficients RQg2. The decision unit 403 controls the reproduced coefficient processing unit 410 according to a control signal Cs3 based on the output RQg1 from the coefficient reproduction unit 402.

The reproduced coefficient processing unit 410 comprises an adder 412 for adding 256 to the reproduced coefficients, a subtracter 413 for subtracting 256 from the reproduced coefficients, and a switch 411 controlled by the control signal Cs3. The switch 411 has an input terminal 411a connected to the output of the coefficient reproduction unit 402, an output terminal 411b connected to the input of the adder 412, an output terminal 411c connected to the input of the subtracter 413, and an output terminal 411d for passing the output RQg1 from the coefficient reproduction unit 402 as it is. The switch 411 connects the input terminal 411a to one of the three output terminals 411b, 411c and 411d, according to the control signal Cs3. The decision unit 403 decides whether or not the values of the reproduced coefficients RQg1 are within the range of the values corresponding to the fixed-length codes each having a code length of bits (-127~127), and outputs the control signal Cs3 according to the result of the decision toward the switch 411.

The image decoding apparatus 400 further includes an inverse quantizer (IQ) 404, an inverse DCT unit 405, and an inverse blocking unit 406. The inverse quantizer 404 subjects the output RQg2 from the reproduced coefficient processing unit 410 to inverse quantization to generate restored DCT coefficients RFg. The inverse DCT unit 405 subjects the restored DCT coefficients RFg to inverse DCT and outputs a restored image signal RBg for each block. The inverse blocking unit 406 integrates the restored image signals RBg of the respective blocks to generate a reproduced image signal RSg having a scanning line structure.

A description is given of the operation of the image decoding apparatus 400.

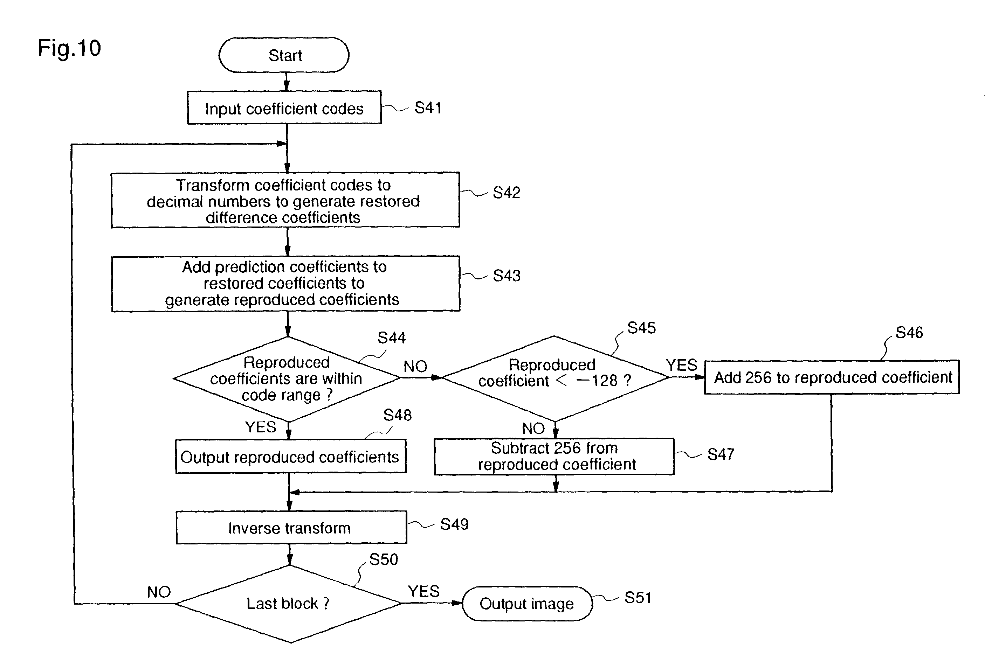

Figure 10 is a flowchart for explaining an intra-frame predictive decoding process by the image decoding apparatus 400.

In the image decoding apparatus 400, when decoding is started and a coded image signal Eg (either the coded signal Cg or the N-bit code sequences BLg described for the third embodiment), which has been obtained by coding an image signal Sg in the image coding apparatus 300 of the third embodiment, is input to the apparatus 400 (step S41), the data analyzer 401 transforms the coded image signal Eg, by data analysis, into decimal values in a decoding process according to the coded signal Cg or the N-bit code sequences BLg (step S42).

To be specific, in the data analyzer 401, when the coded image signal Eg is the variable-length coded signal Cg, the coded image signal Eg is subjected to variable-length coding using code words (code table), thereby generating restored difference coefficients REg represented by decimal numbers. On the other hand, when the coded image signal Eg is the fixed-length coded signal Cg or the N-bit code sequences BLg, the coded image signal Eg is transformed to restored difference coefficients REg as the corresponding decimal numbers.

In step S43, the coefficient reproduction unit 402 employs the reproduced coefficients (restored quantization coefficients) of a block which is positioned in the vicinity of a target block being processed and has already been reproduced, as prediction coefficients of the target block, and obtains the sum of the restored difference coefficients REg of the target block and the prediction coefficients. The unit 402 outputs the sum as reproduced coefficients RQg1 of the target block.

Further, in step S44, it is decided in the decision unit 403 whether or not the values of the reproduced coefficients RQg1 are within the range of the values corresponding to the fixed-length codes each having a code length of 8 bits (-127~127), and the reproduced coefficients RQg1 are subjected to arithmetic processing according to the result of the decision in the reproduced coefficient processing unit 410.

To be specific, when the values of the reproduced coefficients RQg1 are within the above-mentioned range, the switch 411 is controlled by the control signal Cs3 from the decision unit 403 such that the input terminal 411a is connected to the output terminal 411d, whereby the output (reproduced coefficients) RQg1 from the coefficient reproduction unit 402 is output as reproduced and processed coefficients RQg2 (step S48).

If at least one of the values of the reproduced coefficients RQg1 is not within the above-mentioned range, it is further decided in the decision unit 403 whether the value of this reproduced coefficient RQg1 is smaller than -128 or not (step S45). When the result of the decision in step S45 is that the value of the reproduced coefficient RQg1 is smaller than -128, the switch 411 is controlled by the control signal Cs3 from the decision unit 403 such that the input terminal 411a is connected to the output terminal 411b, and 256 is added to the value of the reproduced coefficient RQg1 in the adder 412 and the sum is output as a reproduced and processed coefficient RQg2 (step S46).

When the result of the decision in step S45 is that the value of the reproduced coefficient RQg1 is larger than -128, the switch 411 is controlled by the control signal Cs3 from the decision unit 403 such that the input terminal 411a is connected to the output terminal 411c, and 256 is subtracted from the value of the reproduced coefficient RQg1 and the difference is output as a reproduced and processed coefficient RQg2 (step S47).

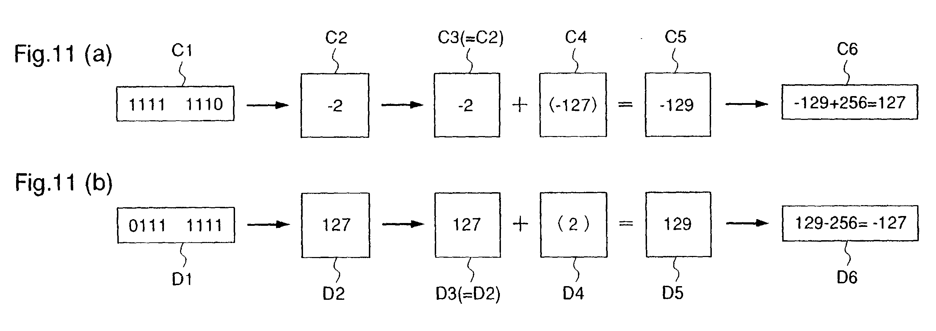

Figures 11(a) and 11(b) are schematic diagrams for explaining decoding processes for N-bit code sequences in the intra-frame predictive decoding by the image decoding apparatus 400.

Figures 11(a) and 11(b) show the decoding processes by using specific values, and correspond to Figures 8(a) and 8(b), respectively. In figures 11(a) and 11(b), numerical values C2, D2, C3(=C2), and D3(=D2) indicate the values of restored difference coefficients (reproduced coefficients) transformed to decimal numbers, C4 and D4 indicate the values of prediction coefficients, and C5 and D5 indicate the values output from the adder 412.

In the process shown in figure 11(a), a code sequence C1 input as an N-bit code sequence BLg is transformed to a decimal number, and -2 is obtained as the value C2 of the reproduced coefficient RQg1. Further, the value C4 of the prediction coefficient, -127, is added to -2 which is the value C3(=C2) of the reproduced coefficient, and -129 is obtained as the value C5 of the output from the adder 412. Since this value -129 is smaller than -128, 256 is added to this value in step S46, and 127 is generated as the value C6 of the reproduced and processed coefficient RQg2. This value is equal to the value A1 of the transform coefficient shown in figure 8 (a).

Turning to figure 11(b), a code sequence D1 input as an N-bit code sequence BLg is transformed to a decimal number, and 127 is obtained as the value D2 of the reproduced coefficient RQg1. Then, the value D4 of the prediction coefficient, 2, is added to 127 as the value D3(=D2), and 129 is obtained as the value D5 of the output from the adder 412. Since 129 is larger than 128, 256 is subtracted from this value in step S47, whereby -127 is generated as the value D6 of the reproduced and processed coefficient RQg2. This value is equal to the value B1 of the transform coefficient shown in figure 8 (b).

To add or subtract 256 to/from the value of the reproduced coefficient according to the results of decision in steps S45 and S46 is equivalent to an arithmetic processing in which a reproduced coefficient expressed by a binary number is transformed to a binary number comprising lower 8 bits of the reproduced coefficient.

The reproduced and processed coefficients RQg2 so produced are transformed to restored DCT coefficients RFg by inverse quantization in the inverse quantizer 404, and the restored DCT coefficients are transformed to a restored image signal RBg corresponding to each block by inverse DCT in the inverse DCT unit 405 (step S49).

Thereafter, in the image decoding apparatus 400, it is decided whether or not the target block is the last block among the blocks composing one frame or one object area (step S50). When the target block is the last block, the intra-frame predictive decoding is ended, and the restored image signals RBg corresponding to the respective blocks are integrated and a reproduced image signal RSg having a scanning line structure and corresponding to one frame or one object area is output (step S51). When the target block is not the last block, the processes of steps S42~S50 are repeated.

As described above, according to the fourth embodiment, a coded signal Cg obtained by coding difference coefficients, which have been obtained by compressively transforming an image signal, by variable-length coding or fixed-length coding, and code sequences BLg each comprising lower 8 bits of a binary code corresponding to each of the difference coefficients, are respectively transformed to restored difference coefficients REg represented by decimal numbers according to appropriate decoding processes. Thereafter, reproduced coefficients obtained by adding prediction coefficients to the restored difference coefficients are compared with 256 (2⁸) and -256 (-2⁸) and, according to the result of the comparison, 256 is added or subtracted to/from the reproduced coefficients, and the reproduced and processed coefficients RQg2 are subjected to inverse transformation to generate a reproduced image signal RSg. Therefore, it is possible to realize an intra-frame predictive decoding process adapted to an intra-frame predictive coding process in which difference coefficients which cannot be coded by variable-length coding or fixed-length (8 bits) coding are transformed to binary codes, and a code sequence comprising lower 8 bits of each of the binary codes is output as a coded signal.

When a coding program or a decoding program for implementing the image coding process or the image decoding process according to the aforementioned embodiments is recorded in a data storage medium such as a floppy disk, the coding or decoding process can be easily performed in an independent computer system.

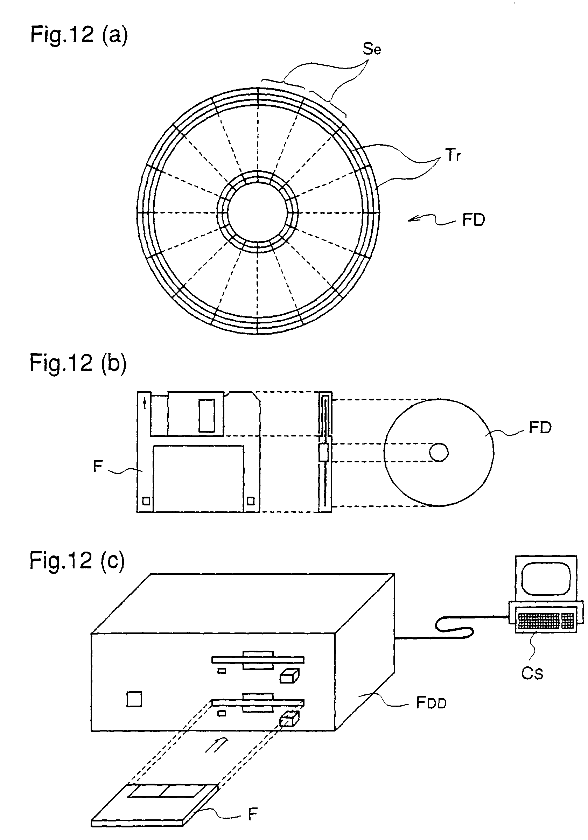

Figures 12(a)-12(c) are diagrams for explaining the case where the image coding process by the image coding apparatus according to the first or third embodiment, or the image decoding process by the image decoding apparatus according to the second or fourth embodiment is executed by a computer system, using a floppy disk which contains a program of the coding or decoding process.

Figure 12(b) shows a front view of a floppy disk FD, a cross-sectional view thereof, and a floppy disk body D. Figure 12(a) shows an example of a physical format of the floppy disk body D. The floppy disk body D is contained in a case F. On the surface of the disk body D, a plurality of tracks Tr are formed concentrically from the outer circumference of the disk toward the inner circumference. Each track is divided into 16 sectors (Se) in the angular direction. Therefore, in the floppy disk FD containing the above-mentioned program, data of the program are recorded in the assigned sectors on the floppy disk body D.

Figure 12(c) shows the structure for recording the program in the floppy disk FD and performing the image processing by software using the program stored in the floppy disk FD. When the program is recorded in the floppy disk FD, data of the program are written in the floppy disk FD from the computer system Cs through the floppy disk drive FDD. When the above-mentioned image coding apparatus or image decoding apparatus is constructed in the computer system Cs by the program recorded in the floppy disk FD, the program is read from the floppy disk FD by the floppy disk drive FDD and then loaded to the computer system Cs.

Although the image processing by the computer system is described using a floppy disk as an example of a data storage medium, the image processing can be carried out in similar manner with an optical disk. The data storage medium is not restricted to these disks, and any medium may be employed as long as it can contain the program, for example, an IC card or a ROM cassette.

## Claims

1. An image coding method for an image signal divided into processable signal units, the method comprising transforming (S12, S13) the image signal into transform coefficients by data-compressing the image signal for each said processable unit, and coding the transform coefficients in a coding process using code-words comprising a predetermined number of codes, said coding process comprising the steps of:
identifying (S14) whether or not the values of target difference coefficients, which are differences between target transform coefficients to be processed and transform coefficients as prediction coefficients other than the target transform coefficients, correspond to any of the codes composing the code-words; and
coding (S15) the target difference coefficient when the values of the target difference coefficients correspond to any of the codes in the code-words; and coding (S16) the target transform coefficients when at least one of the values of the target difference coefficients corresponds to none of the codes in the code-words.

2. The image coding method of Claim 1 wherein:
said code-words are composed of a plurality of variable-length codes, and a plurality of fixed-length codes having the same bit length;
in the process of coding each of the target transform coefficients, when there is a variable-length code corresponding to the value of the target transform coefficient, the target transform coefficient is coded using the variable-length code, and when there is no variable-length code corresponding to the value of the target transform coefficient, the target transform coefficient is coded using a fixed-length code; and
in the process of coding each of the target difference coefficients, when there is a variable-length code corresponding to the value of the target difference coefficient, the target difference coefficient is coded using the variable-length code, and when there is no variable-length code corresponding to the value of the target difference coefficient, the target difference coefficient is coded using a fixed-length code.

3. An image coding method comprising dividing (S11) an image signal into image signal units respectively corresponding to a plurality of unit areas into which an image space for display is divided, and coding an image signal unit corresponding to a target unit area to be coded, the step of coding the image signal unit comprising the image coding method defined in claim 1.

4. An image decoding method for decoding a coded image signal based on an identification signal from the outside, said decoding comprising the steps of:
deciding (S23) whether a coded image signal to be decoded corresponds to target transform coefficients obtained by data compression of an image signal or target difference coefficients which are differences between the target transform coefficients and transform coefficients as prediction coefficients other than the target transform coefficients, based on the identification signal;
decoding (S24) the coded image signal to generate a decoded image signal to be processed as reproduced coefficients when the coded image signal to be decoded corresponds to the target transform coefficients; and generating (S25) reproduced coefficients by adding prediction coefficients obtained from a decoded image signal other than the decoded image signal to be processed, to the decoded image signal to be processed, when the coded image signal to be decoded corresponds to the target difference coefficients; and
subjecting the reproduced coefficients to data expansion to generate a reproduced image signal.

5. An image coding apparatus for coding an image signal divided into processable signal units, the apparatus comprising a data compression unit for transforming the image signal into transform coefficients by data compression for each said processable unit, and a coding unit (105, 106, 111) for coding the transform coefficients by using code-words comprising a predetermined number of codes,
said data compression unit comprising:
difference coefficient generating means (104) for generating target difference coefficients which are differences between target transform coefficients to be processed and transform coefficients as prediction coefficients other than the target transform coefficients; and
said coding unit comprising:
identification means (111) for identifying whether the values of the target difference coefficients correspond to any of the codes in the code-words, and
coding means (105, 106) for coding the target difference coefficients when the values of the target difference coefficients correspond to any of the codes in the code-words, while coding the target transform coefficients when at least one of the values of the target difference coefficients corresponds to none of the codes in the code-words, based on the result from the identification means.

6. An image decoding apparatus for decoding a coded image signal based on an identification signal from the outside, said decoding apparatus comprising:
decision means (204) for deciding whether a coded image signal to be decoded corresponds to target transform coefficients obtained by data compression of an image signal, or target difference coefficients which are differences between the target transform coefficients and transform coefficients as prediction coefficients other than the target transform coefficients, based on the identification signal;
first coefficient generating means (201) for generating a decoded image signal to be processed as first reproduced coefficients by decoding the coded image signal to be processed;
second coefficient generating means (201, 202) for generating second reproduced coefficients by adding prediction coefficients obtained from a decoded image signal other than the decoded image signal to be processed, to the decoded image signal to be processed;
switching means (203) for selecting the output from the first coefficient generating means when the coded image signal to be processed corresponds to the target transform coefficients, while selecting the output from the second coefficient generating means when the coded image signal to be processed corresponds to the target difference coefficients, based on the result from the decision means (204); and
data expansion means (205, 206, 207) for data-expanding the reproduced coefficients output from the switching means to generate a reproduced image signal.

7. A data storage medium containing a program processing an image signal, said program being a program which makes a computer perform image signal processing by an image processing method according to any of claims 1 to 4.

## Patentansprüche

1. Bildcodierungsvorrichtung für ein Bildsignal, das in verarbeitbare Signaleinheiten unterteilt ist, wobei das Verfahren aufweist:
Transformieren (S12, S13) des Bildsignales in Transformations-Koeffizienten durch Datenkompression des Bildsignales für jede dieser verarbeitbaren Einheiten und Codieren der Transformations-Koeffizienten in einem Codierungsprozess unter Verwendung von Codewörtern, die eine vorbestimmte Anzahl von Codes aufweisen, wobei der Codierungsprozess die Schritte aufweist:
Identifizieren (S14), ob die Werte von Zieldifferenz-Koeffizienten, die Differenzen zwischen zu verarbeitenden Zieltransformations-Koeffizienten und Transformations-Koeffizienten, wie Prädiktions-Koeffizienten, mit Ausnahme der Zieltransformations-Koeffizienten sind, mit einem der Codes korrespondieren, die die Codewörter bilden; und
Codieren (S15) der Zieldifferenz-Koeffizienten, wenn die Werte der Zieldifferenz-Koeffizienten mit einem der Codes in den Codewörtern korrespondieren; und
Codieren (S16) der Zieltransformations-Koeffizienten, wenn wenigstens einer der Werte der Zieldifferenz-Koeffizienten mit keinem der Codes in den Codewörtern korrespondiert.

2. Bildcodierungsverfahren nach Anspruch 1, wobei
die Codewörter aus einer Mehrzahl von Codes variabler Länge und einer Mehrzahl von Codes fester Länge mit der gleichen Bitlänge gebildet sind;
in dem Prozess des Codierens von jedem der Zieltransformations-Koeffizienten wird, wenn ein Code variabler Länge existiert, der mit dem Wert des Zieltransformations-Koeffizienten korrespondiert, der Zieltransformations-Koeffizient unter Verwendung des Codes variabler Länge codiert, und, wenn kein Code variabler Länge existiert, der mit dem Wert des Zieltransformations-Koeffizienten korrespondiert, der Zieltransformations-Koeffizient unter Verwendung eines Codes fester Länge codiert; und
in dem Prozess der Codierung von jedem der Zieltransformations-Koeffizienten wird, wenn ein Code variabler Länge existiert, der mit dem Wert des Zieldifferenz-Koeffizienten korrespondiert, der Zieldifferenz-Koeffizient unter Verwendung des Codes variabler Länge codiert, und, wenn kein Code variabler Länge existiert, der mit dem Wert des Zieldifferenz-Koeffizienten korrespondiert, der Zieldifferenz-Koeffizient unter Verwendung eines Codes fester Länge codiert.

3. Bildcodierungsverfahren, das aufweist:
Unterteilen (S11) eines Bildsignales in Bildsignaleinheiten, die jeweils einer Mehrzahl von Einheitenbereichen entsprechen, in die ein Bildraum zur Anzeige unterteilt ist, und Codieren einer Bildsignaleinheit, die einem zu codierenden Zieleinheitenbereich entspricht, wobei der Schritt des Codierens der Bildsignaleinheit das Bildcodierungsverfahren gemäß Anspruch 1 aufweist.

4. Bilddecodierungsverfahren zum Decodieren eines codierten Bildsignales basierend auf einem Identifikationssignal von außerhalb, wobei dieses Decodieren die Schritte aufweist:
Entscheiden (S23), ob ein zu decodierendes codiertes Bildsignal mit Zieltransformations-Koeffizienten, die durch Datenkompression eines Bildsignales erhalten worden sind, oder Zieldifferenz-Koeffizienten korrespondiert, die Differenzen zwischen den Zieltransformations-Koeffizienten und Transformations-Koeffizienten, wie Prädiktions-Koeffizienten, mit Ausnahme der Zieltransformations-Koeffizienten sind, basierend auf dem Identifikationssignal;
Decodieren (S24) des codierten Bildsignales, um ein zu verarbeitendes decodiertes Bildsignal als wiedergegebene Koeffizienten zu erzeugen, wenn das zu decodierende codierte Bildsignal den Zieltransformations-Koeffizienten entspricht; und
Erzeugen (S25) von wiedergegebenen Koeffizienten durch Addieren von Prädiktions-Koeffizienten, die von einem decodierten Bildsignal mit Ausnahme des zu verarbeitenden decodierten Bildsignales erhalten worden sind, auf das zu verarbeitende codierte Bildsignal, wenn das zu decodierende codierte Bildsignal mit den Zieldifferenz-Koeffizienten korrespondiert; und
Unterziehen der wiedergegebenen Koeffizienten einer Datenexpansion, um ein wiedergegebenes Bildsignal zu erzeugen.

5. Bildcodierungsvorrichtung zum Codieren eines Bildsignales, das in verarbeitbare Signaleinheiten unterteilt ist, wobei die Vorrichtung aufweist:
eine Datenkompressionseinheit zum Transformieren der Bildsignale in Transformations-Koeffizienten durch Datenkompression für jede der verarbeitbaren Einheiten und eine Codierungseinheit (105, 106, 111) zum Codieren der Transformations-Koeffizienten unter Verwendung von Codewörtern, die eine vorbestimmte Anzahl von Codes aufweisen,
wobei die Datenkompressionseinheit aufweist:
Differenz-Koeffizienten-Erzeugungsmittel (104) zum Erzeugen von Zieldifferenz-Koeffizienten, die Differenzen zwischen den zu verarbeitenden Zieltransformations-Koeffizienten und Transformations-Koeffizienten sind, wie Prädiktions-Koeffizienten mit Ausnahme der Zieltransformations-Koeffizienten; und
wobei die Codierungseinheit aufweist:
Identifikationsmittel (111) zum Identifizieren, ob die Werte der Zieldifferenz-Koeffizienten mit einem der Codes in den Codewörtern korrespondiert, und
Codierungsmittel (105, 106) zum Codieren der Zieldifferenz-Koeffizienten, wenn die Werte der Zieldifferenz-Koeffizienten mit einem der Codes in den Codewörtern korrespondiert, während des Codierens der Zieltransformations-Koeffizienten, wenn wenigstens einer der Werte der Zieldifferenz-Koeffizienten mit keinem der Codes in den Codewörtern korrespondiert, basierend auf dem Ergebnis der Identifikationsmittel.

6. Eine Bilddecodierungsvorrichtung zum Decodieren eines codierten Bildsignales basierend auf einem Identifikationssignal von außerhalb, wobei die Decodierungsvorrichtung aufweist:
Entscheidungsmittel (204) zum Entscheiden, ob ein zu decodierendes codiertes Bildsignal mit den Zieltransformations-Koeffizienten korrespondiert, die durch Datenkompression eines Bildsignales erhalten worden sind, oder mit Zieldifferenz-Koeffizienten, welche Differenzen zwischen den Zieltransformations-Koeffizienten und Transformations-Koeffizienten, wie Prädiktions-Koeffizienten, mit Ausnahme derZieltransformations-Koeffizienten sind, basierend auf dem Identifikationssignal;
erste Koeffizienten-Erzeugungsmittel (201) zum Erzeugen eines zu verarbeitenden decodierten Bildsignales als erste wiedergegebene Koeffizienten durch Codieren des zu verarbeitenden codierten Bildsignales;
zweite Koeffizienten-Erzeugungsmittel (201, 202) zum Erzeugen zweiter wiedergegebener Koeffizienten durch Addieren von Prädiktions-Koeffizienten, die von einem decodierten Bildsignal mit Ausnahme des zu verarbeitenden decodierten Bildsignales erhalten worden sind, auf das zu verarbeitende decodierte Bildsignal;
Schaltmittel (203) zum Selektieren des Ausgangs der ersten Koeffizienten-Erzeugungsmittel, wenn das zu verarbeitende codierte Bildsignal mit den Zieltransformations-Koeffizienten korrespondiert, während des Auswählens des Ausgangs der zweiten Koeffizienten-Erzeugungsmittel, wenn das zu verarbeitende codierte Bildsignal mit den Zieldifferenz-Koeffizienten korrespondiert, basierend auf dem Ergebnis der Entscheidungsmittel (204); und
Datenexpansionsmittel (205, 206, 207) zum Datenexpandieren der wiedergegebenen Koeffizienten, die von den Schaltmitteln ausgegeben worden sind, um ein wiedergegebenes Bildsignal zu erzeugen.

7. Datenspeichermedium, das ein ein Bildsignal verarbeitendes Programm beinhaltet, wobei das Programm ein Programm ist, das einen Computer veranlasst, Bildsignalverarbeitung mit einem Bildverarbeitungsverfahren gemäß einem der Ansprüche 1 bis 4 auszuführen.

## Revendications

1. Procédé de codage d'image destiné à un signal d'image divisé en des unités de signal pouvant être traitées, le procédé comprenant la transformation (S12, S13) du signal d'image en des coefficients de transformation grâce à une compression des données du signal d'image pour chaque dite unité pouvant être traitée, et le codage des coefficients de transformation dans un traitement de codage utilisant des mots de codes comprenant un nombre prédéterminé de codes, ledit traitement de codage comprenant les étapes consistant à :
identifier (S14) si les valeurs des coefficients de différence cible qui sont des différences entre les coefficients de la transformation cible à traiter et les coefficients de transformation en tant que coefficients de prédiction autres que les coefficients de transformation cible correspondent ou non à l'un quelconque des codes qui composent les mots de codes, et
coder (S15) le coefficient de différence cible lorsque les valeurs des coefficients de différence cible correspondent à l'un quelconque des codes dans les mots de codes,
et coder (S16) les coefficients de transformation cible lorsqu'au moins l'une des valeurs des coefficients de différence cible ne correspond à aucun des codes dans les mots de codes.

2. Procédé de codage d'image selon la revendication 1, dans lequel :
lesdits mots de codes sont composés d'une pluralité de codes à longueur variable, et une pluralité de codes à longueur fixe présentant la même longueur en bits,
dans le traitement de codage de chacun des coefficients de transformation cible, lorsqu'il existe un code à longueur variable correspondant à la valeur du coefficient de transformation cible, le coefficient de transformation cible est codé en utilisant le code à longueur variable, et lorsqu'il n'y a pas de code à longueur variable correspondant à la valeur du coefficient de transformation cible, le coefficient de transformation cible est codé en utilisant un code de longueur fixe, et
dans le traitement de codage de chacun des coefficients de différence cible, lorsqu'il existe un code à longueur variable correspondant à la valeur du coefficient de différence cible, le coefficient de différence cible est codé en utilisant le code à longueur variable, et lorsqu'il n'y a pas de code à longueur variable correspondant à la valeur du coefficient de différence cible, le coefficient de différence cible est codé en utilisant un code de longueur fixe.

3. Procédé de codage d'image comprenant la division (S11) d'un signal d'image en des unités de signaux d'image correspondant respectivement à une pluralité de zones élémentaires dans lesquelles un espace d'image destiné à un affichage est divisé, et le codage d'une unité de signal d'image correspondant à une zone élémentaire cible à coder, l'étape de codage de l'unité de signal comprenant le procédé de codage d'image défini dans la revendication 1.

4. Procédé de décodage d'image destiné à décoder un signal d'image codé sur la base d'un signal d'identification provenant de l'extérieur, ledit décodage comprenant les étapes consistant à :
définir (S23) si un signal d'image codé devant être décodé correspond à des coefficients de transformation cible obtenus par une compression de données d'un signal d'image ou des coefficients de différence cible qui représentent les différences entre les coefficients de la transformation cible et les coefficients de la transformation en tant que coefficients de prédiction autres que les coefficients de transformation cible, sur la base du signal d'identification,
décoder (S24) le signal d'image codé afin de générer un signal d'image décodé devant être traité sous forme de coefficients reproduits lorsque le signal d'image codé devant être décodé correspond aux coefficients de transformation cible, et
générer (S25) des coefficients reproduits en ajoutant des coefficients de prédiction obtenus à partir d'un signal d'image décodé autre que le signal d'image décodé à traiter, au signal d'image décodé devant être traité, lorsque le signal d'image codé devant être décodé correspond aux coefficients de différence cible, et
soumettre les coefficients reproduits à une expansion des données afin de générer un signal d'image reproduit.

5. Dispositif de codage d'image destiné à coder un signal d'image divisé en des unités de signal pouvant être traitées, le dispositif comprenant une unité de compression de données destinée à transformer le signal d'image en des coefficients de transformation grâce à une compression de données pour chaque dite unité pouvant être traitée, et une unité de codage (105, 106, 111) destinée à coder les coefficients de transformation en utilisant des mots de codes comprenant un nombre prédéterminé de codes,
ladite unité de compression de données comprenant :
un moyen de génération de coefficient de différence (104) destiné à générer les coefficients de différence cible qui représentent des différences entre les coefficients de transformation cible à traiter et les coefficients de transformation en tant que coefficients de prédiction autres que les coefficients de transformation cible, et
ladite unité de codage comprenant :
un moyen d'identification (111) destiné à identifier si les valeurs des coefficients de différence cible correspondent à l'un quelconque des codes dans les mots de codes, et
un moyen de codage (105 ,106) destiné à coder les coefficients de différence cible lorsque les valeurs des coefficients de différence cible correspondent à l'un quelconque des codes dans les mots de codes, tout en codant les coefficients de transformation cible lorsqu'au moins l'une des valeurs des coefficients de différence cible ne correspond à aucun des codes dans les mots de codes, sur la base du résultat du moyen d'identification.

6. Dispositif de décodage d'image destiné à décoder un signal d'image codé sur la base d'un signal d'identification provenant de l'extérieur, ledit dispositif de décodage comprenant :
un moyen de décision (204) destiné à définir si un signal d'image codé devant être décodé correspond à des coefficients de transformation cible obtenus par une compression des données d'un signal d'image, ou à des coefficients de différence cible qui sont des différences entre les coefficients de la transformation cible et des coefficients de transformation en tant que coefficients de prédiction autres que les coefficients de transformation cible, sur la base du signal d'identification,
un premier moyen de génération de coefficients (201) destiné à générer un signal d'image décodé devant être traité sous forme de premiers coefficients reproduits en décodant le signal d'image codé devant être traité,
un second moyen de génération de coefficients (201, 202) destiné à générer des seconds coefficients reproduits en ajoutant des coefficients de prédiction obtenus à partir d'un signal d'image décodé autre que le signal d'image décodé devant être traité, au signal d'image décodé devant être traité,
un moyen de commutation (203) destiné à sélectionner la sortie provenant du premier moyen de génération de coefficients lorsque le signal d'image codé devant être traité correspond aux coefficients de différence cible, tout en sélectionnant la sortie provenant du second moyen de génération de coefficients lorsque le signal d'image codé devant être traité correspond aux coefficients de différence cible, sur la base du résultat provenant du moyen de décision (204), et
un moyen d'expansion de données (205, 206, 207) destiné à expanser les données des coefficients reproduits fournis en sortie à partir du moyen de commutation afin de générer un signal d'image reproduit.

7. Support de mémorisation de données contenant un programme traitant un signal d'image, ledit programme étant un programme qui amène un ordinateur à exécuter un traitement de signal d'image grâce à un procédé de traitement d'image selon l'une quelconque des revendications 1 à 4.
